# EUROPÄISCHE PATENTSCHRIFT

(11) **EP 0 514 717 B1**
(45) Veröffentlichungstag und Bekanntmachung des Hinweises auf die Patenterteilung: **07.12.1994**
(21) Anmeldenummer: 92107755.8
(22) Anmeldetag: 08.05.1992
(51) Int. Cl.: B01D 3/42

(54) **Verfahren zum Trennen von Mehrstoffsystemen mit zwischensiedenden Substanzen in Trenn-kolonnen mit Seitenabzug**
Process for the separation of systems containing two or more substances having an intermediate boiling point in a separation column with a side stream
Procédé de séparation de systèmes à deux ou plusieurs composantes avec des substances ayant un point d'ébullition intermédiaire dans une colonne de séparation avec un déchargement intermédiaire

(30) Priorität: 21.05.1991 DE 4116536
(43) Veröffentlichungstag der Anmeldung: 25.11.1992
(73) Patentinhaber: BAYER AG, 51368 Leverkusen (DE)
(72) Erfinder: Lang, Lothar, Dr., W-5000 Köln 80 (DE); Rhiel, Franz Ferdinand, Dr., W-4047 Dormagen (DE); Weymans, Günther, Dr., W-5090 Leverkusen (DE)

(56) Entgegenhaltungen:
- FR-A- 2 105 840
- US-A- 2 684 326
- SOVIET INVENTIONS ILLUSTRATED Section Ch, Week 17, 3. Juni 1981 Derwent Publications Ltd.,London,GB;Class D,AN 30413

## Beschreibung

Mehrstoffsysteme mit Zwischensiedern werden in vielen Fällen über mehrere miteinander verschaltete Kolonnen getrennt, da die Regelung über einen Seitenabzug mit der Randbedingung hoher Trennausbeute bisher nicht realisiert werden konnte.

Es ist zum Beispiel versucht worden, 3,4 DBN (Dichlorbuten) von 1,4 DBN (cis und trans) im Beisein von Leichtsiedern derart zu trennen, daß Sumpfabzug und Seitenabzug mit festen Abzugsmengen betrieben werden.

Bekannt ist auch, eine Temperatur beim Seitenabzug zur Regelung des Seitenabzuges zu verwenden. Das Verfahren hat den Nachteil, daß diese Regelung entweder stark nichtlinear reagiert und damit schwierig einzustellen ist oder das Regelsignal nur in einem sehr engen Betriebsbereich eingesetzt werden kann.

Überraschend wurde nun gefunden, daß bei Verwendung von Temperaturdifferenzen innerhalb der Kolonne als Regelsignal für den Seitenabzug die bisher bekannten Nachteile der Seitenabzugsregelung nicht mehr auftreten und bei sicherer Regelung eine hohe Trennqualität erreicht werden kann.

Gegenstand der vorliegenden Erfindung ist daher ein Verfahren zum Trennen von Mehrstoffsystemen mit zwischensiedenden Substanzen in Trennkolonnen, bevorzugt Destillationskolonnen, mit Seitenabzug, dadurch gekennzeichnet, daß man
a) oberhalb und unterhalb des Seitenabzuges an der Kolonne oder im Innern der Kolonne die Temperaturen Tu (= unterhalb) und To (= oberhalb) erfaßt,
b) die Temperaturdifferenz D = Tu-To als Signal zum Regeln des Seitenabzuges verwendet
und
c) Tu oder To über die Verdampferleistung oder den Sumpfabzug oder den Rücklauf oder die Destillatentnahme oder das Rücklaufverhältnis konstant regelt.

Mit dem erfindungsgemäßen Verfahren erzielt man folgende Vorteile:
a) das Regelverfahren kann auch bei nichtlinearen Prozessen mit Erfolg eingesetzt werden,
b) die Regelung reagiert wenig sensitiv auf Abweichungen von Regelparametern (robuste Regelung!),
c) es kann ein größerer Lastbereich mit einer einzigen Regeleinstellung abgedeckt werden,
d) Produktverluste über den Seitenabzug werden verringert,
e) die über den Seitenabzug auszuschleusende Komponente kann höher angereichert werden,
f) es wird ein weiterer Freiheitsgrad in das System eingeführt, der für eine Prozess-Optimierung genutzt werden kann.

Im folgenden wird die Erfindung anhand eines Verfahrensschemas und eines Ausführungsbeispieles näher erläutert.

Das Kernstück der Apparatur zur Durchführung des erfindungsgemäßen Verfahrens ist die Trennkolonne 1 mit den Böden 2₁ bis 2₄₅.

Das zu trennende Produkt wird über den Zulauf 3 der Kolonne 1 zugeführt. Die getrennten Komponenten werden am Kopf 4 über den Kopfabzug 5, am Sumpf 6 über den Sumpfabzug 7 und an der Kolonne 1 über den Seitenabzug 8 entnommen. Das am Kopf 4 entnommene dampfförmige Produkt wird in einem Kondensator 9 kondensiert und in dem nachgeschalteten Sammelgefäß 10 als Destillat aufgefangen. Das Sammelgefäß 10 ist mit einer Niveauregelung 11 ausgestattet. Ein Teil des Destillats wird über einen geregelten Rücklauf auf den obersten Boden 2₁ der Kolonne 1 zurückgeführt. Die Rücklaufregelung sorgt für ein konstantes Rücklaufverhältnis; d.h. die Rücklaufmenge, bezogen auf die Kopfentnahmemenge, wird durch entsprechende Nachstellung des Rücklaufventiles 14 konstant gehalten.

Mit Hilfe der Temperatursensoren 15, 16, 17 werden an verschiedenen Stellen die Temperaturen innerhalb der Kolonne gemessen. Die Sensoren 15 und 16 sind dabei oberhalb und der Sensor 17 unterhalb des Seitenabzugs 8 angeordnet. Aus den von den Sensoren 15 und 16 gelieferten Temperaturwerten wird ein Mittelwert To gebildet, während der untere Sensor 17 den Temperaturmeßwert Tu liefert. Mittels des Temperaturreglers 18 wird die Temperatur Tu durch Nachstellung der Verdampferheizung 19 im Sumpf 6 konstant geregelt. Außerdem ist der Sumpf 6 mit einer Niveauregelung 20 versehen, wobei das Sumpfabzugsventil 21 als Stellglied dient. Zur Regelung der Temperatur Tu könnte alternativ auch der Sumpfabzug oder der Rücklauf oder die Destillatentnahme oder das Rücklaufverhältnis als Stellgröße herangezogen werden. Aus den Temperaturwerten To (Mittelwert der an den Sensoren 15, 16 gemessenen Temperaturen) und Tu (Temperatur am Sensor 17) wird das Differenzsignal D = Tu - To gebildet. Das Differenzsignal D wird nun als Regelsignal zur Nachstellung des Seitenabzugsventils 22 benutzt (Differenzregelung 23). Durch entsprechende Nachstellung des Seitenabzugventils 22 wird erreicht, daß die Differenztemperatur D konstant oder auf einem mittels einer Kennlinie vorgegebenen Sollwert gehalten wird.

Besonders geeignete Trennkolonnen sind: Destillationskolonnen, Reaktionskolonnen, Extraktivdestillationskolonnen und Azeotropdestillationskolonnen. Bevorzugt sind Destillationskolonnen und Extraktivdestillationskolonnen. Besonders bevorzugt sind Destillationskolonnen, Boden-, Füllkörper- und Packungskolonnen, mit dampfförmigem oder flüssigem Seitenabzug im Verstärker- oder Abtriebstell, der nicht direkt oberhalb des Sumpf- oder unterhalb des Kopfabzugs liegt.

Als Mehrstoffsysteme kommen in Frage alle Systeme (gas oder flüssig) mit Siedetemperaturen zwischen -180°C und +600°C. Insbesondere kommen in Frage Mehrstoffsysteme, die die Verbindungen Lösungsmittel und Wasser oder Hochsieder oder Schleppmittel wie Tetraethylenglykol enthalten, sowie Mehrstoffsysteme, deren Hauptkomponenten hohe relative Flüchtigkeiten aufweisen.

Zwischensieder sind Stoffsysteme mit Siedetemperaturen zwischen den beiden Hauptkomponenten des Mehrstoffsystems. Es können ein, zwei oder mehr Zwischensieder vorhanden sein. Es können auch mehr als 2 Hauptkomponenten vorhanden sein.

Als Regler für den Seitenabzug sind denkbar P-Regler, PI-Regler, PID-Regler, schaltende Regler, Zweipunkt-Regler mit und ohne Hysterese, Dreipunktregler mit und ohne Hysterese, Kaskadenregelungen, adaptive Regler, Zustandsregler, frequenzabhängige Regler, nichtlineare Regler, prädiktive Regler, modellgestützte Regelungen, Mehrgrößenregler, Entkopplungsregler.

Bevorzugte Regler sind P-Regler, PI-Regler, PID-Regler, Zweipunkt-Regler mit und ohne Hysterese, adaptive Regler, Zustandsregler, nichtlineare Regler, modellgestützte Regelungen, Mehrgrößenregler. Besonders bevorzugt sind PI-Regler, Zweipunkt-Regler mit und ohne Hysterese, Zustandsregler, modellgestützte Regelungen.

Als Temperaturmeßfühler kommen in Frage Thermometer, Thermoelemente, Widerstandsthermometer, PT100, Infrarotmessung. Bevorzugte Temperaturmesser sind: Thermoelemente, Widerstandsthermometer, PT100.

Der Ort der Temperaturmessung oberhalb des Seitenabzuges und der Ort der Temperaturmessung unterhalb des Seitenabzuges kann im Prinzip beliebig gewählt werden, wenn er wenigstens einen Boden vom Kopf- bzw. Sumpf der Kolonne entfernt liegt. Bevorzugt werden die Meßorte wie folgt ausgewählt:
a) typischerweise ca. 4 bis 5 Böden oberhalb des Seitenabzuges und unterhalb des Seitenabzuges oder
b) über ein empirisches Verfahren zur Meßortbestimmung, indem Störungen auf die Kolonne aufgegeben werden und die diesbezüglichen Änderungen der Seitenabzugsmenge und/oder des Zwischensiedergehalts sensitiven Temperaturmeßstellen bestimmt werden. Unter sensitiv ist in diesem Zusammenhang zu verstehen, daß die Temperaturen an den Meßstellen schnell und mit genügend großer Amplitude auf obige Änderungen reagieren. Aus diesen sensitiven Temperaturmeßstellen können jeweils eine oder auch mehrere Meßstellen als Meß-/Regelgröße ausgewählt werden. Beim Einsatz von mehr als einer Meßstelle oberhalb oder unterhalb des Seitenabzugs ist für den jeweiligen Bereich eine geeignete Mittelung vorzunehmen;
c) alternativ können mit Hilfe von Messungen oder Simulationen die Lage der Stoffaustauschzonen ermittelt und die Meßfühler zur Temperaturerfassung in Bereichen mit großen Stoffaustauschströmen angebracht werden. Beim Einsatz von mehr als einer Meßstelle oberhalb oder unterhalb des Seitenabzugs ist für den jeweiligen Bereich eine Mittelung vorzunehmen.

In einer besonderen Ausführungsform des erfindungsgemäßen Verfahrens kann man die Kolonne auch zunächst bei geschlossenem Seitenabzug anfahren, bis zum Beispiel die Zwischensieder-Konzentration am Ausgang des Seitenabzuges genügend hoch konzentriert ist. Dies ist zum Beispiel der Fall, wenn sich zwei Bereiche in der Kolonne ausgebildet haben, in denen sich die Bodentemperaturen stark ändern (Temperaturfronten). Man wählt in diesem Fall die Orte der Temperaturmessungen bevorzugt in der Nähe der Temperaturfronten.

### Ausführungsbeispiel

In einer Destillationskolonne mit 44 Trennstufen wird ein Gemisch mit den Hauptkomponenten Methanol (63 %) und Wasser (36 %) sowie dem Zwischensleder iso-Butanol (1 %) derart aufgetrennt, daß das Methanol im Kopfprodukt mit einer Reinheit von 99,99 % und das Wasser im Sumpfprodukt mit einer Reinheit von 99,999 % abgezogen wird, während das iso-Butanol über einen dampfförmigen Seitenabzug im Abtriebsteil ausgeschleust wird.

Die Kolonne wird mit einem konstanten Rücklaufverhältnis von 1,7 betrieben und der Sumpfstand über den Sumpfabzug geregelt. Aus den Temperaturmessungen auf dem 29. (T29) und 31. (T31) Boden wird ein Mittelwert gemäß

To = (T29 + T31)/2.

gebildet. Die Temperaturmessung auf dem 41. Boden (T41) wird als Temperatur unterhalb des Seitenabzugs Tu für die Bildung des Regelsignals

D = Tu - To

verwendet. Mit den Regelgrößen D und Tu lassen sich nun alternativ folgende zwei Regelstrategien umsetzen:
1. Tu wird mit Hilfe einer PI-Regelung über den Heizdampf und D mit Hilfe einer PI-Regelung über die Seitenabzugsmenge geregelt. Durch diese Regelung können die Verluste an Methanol über den Seitenabzug verringert werden.
2. Tu wird mit Hilfe einer PI-Regelung über den Heizdampf geregelt. Das Regelsignal D wird für eine Zweipunktregelung derart eingesetzt, daß der Seitenabzug geschlossen bleibt, bis sich eine minimale Temperaturdifferenz Dmin einstellt. Zu diesem Zeitpunkt wird der Seitenabzug vom Regler auf einen festen wert geöffnet, der beibehalten wird, bis das Regelsignal eine maximale Temperaturdifferenz Dmax erreicht hat. Dann wird der Seitenabzug vom Regler geschlossen und der Zyklus wiederholt sich. Diese Regelung hat gegenüber der kontinuierlichen Regelstrategie unter 1. den Vorteil, daß der Zwischensieder höher angereichert werden kann und dadurch die Methanolverluste noch weiter minimiert werden können.

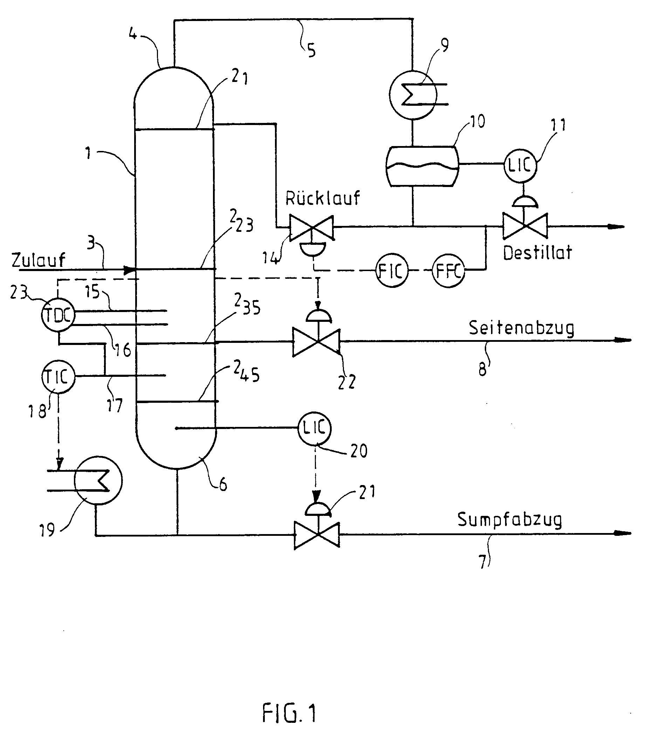

## Patentansprüche

1. Verfahren zum Trennen von Mehrstoffsystemen mit zwischensiedenden Substanzen in Trennkolonnen mit Seltenabzug, dadurch gekennzeichnet, daß
a) oberhalb und unterhalb des Seitenabzuges an der Kolonne oder im Innern der Kolonne die Temperaturen Tu (= unterhalb) und To (= oberhalb) erfaßt werden,
b) die Temperaturdifferenz D = Tu - To als Signal zum Regeln des Seitenabzuges verwendet wird
und
c) eine der beiden Temperaturen Tu oder To über die Verdampferleistung oder den Sumpfabzug oder den Rücklauf oder die Destillatentnahme oder das Rücklaufverhältnis konstant geregelt wird.

2. Verfahren nach Anspruch 1, dadurch gekennzeichnet, daß man die Kolonne zunächst bei geschlossenem Seitenabzug anfährt.

3. Verfahren nach Anspruch 1 bis 2, dadurch gekennzeichnet, daß man durch vorherige experimentelle Eichung die Lage der Stoffaustauschzonen der Hauptkomponenten und der Nebenkomponenten mit den Hauptkomponenten bestimmt, an diesen Stellen oberhalb bzw. unterhalb des Seitenabzuges die Temperaturen Tu und To mißt und dann zur Regelung des Seitenabzuges verwendet.

4. Verfahren nach Anspruch 1 bis 3, dadurch gekennzeichnet, daß statt jeweils einer Temperatur eine Mittelwertbildung über zwei oder mehrere Temperaturen für Tu und/oder To verwendet wird.

## Claims

1. Process for the separation of multi-component systems with substances having an intermediate boiling point in separation columns with a side outlet characterised in that
a) the temperatures Tᵤ (= below) and Tₒ (= above) are recorded above and below the side outlet on or within the column,
b) the temperature difference D = Tᵤ - Tₒ is used as a signal to control the side outlet
and
c) one of the two temperatures Tᵤ or Tₒ is constantly controlled via evaporator performance or bottoms outlet or reflux or distillate discharge or the reflux ratio.

2. Process according to claim 1, characterised in that the column is initially started up with the side outlet closed.

3. Process according to claims 1 to 2, characterised in that the position of the material exchange zones of the main components and of the secondary components with the main components is determined by prior experimental calibration, the temperatures Tᵤ or Tₒ are measured above and below the side outlet at these points and are then used to control the side outlet.

4. Process according to claims 1 to 3, characterised in that an average value of two or more temperatures is used instead of a single temperature for each of Tᵤ and/or Tₒ.

## Revendications

1. Procédé pour la séparation de systèmes multicomposants comportant des substances ayant des points d'ébullition intermédiaires dans des colonnes de séparation munies d'une sortie intermédiaire, caractérisé en ce que :
a) On saisit au-dessus et au-dessous de la sortie intermédiaire sur la colonne ou à l'intérieur de la colonne les températures Tu (au-dessous) et To (au-dessus),
b) on utilise la différence de température D = Tu - To comme signal pour régler la sortie intermédiaire et
c) on règle une des deux températures Tu ou To à une valeur constante par l'intermédiaire du débit de l'évaporateur ou de la sortie en queue ou du reflux ou du prélèvement du distillat ou du faux de reflux.

2. Procédé selon la revendication 1, caractérisé en ce que dans un premier temps on met en marche la colonne avec la sortie intermédiaire fermée.

3. Procédé selon les revendications 1 à 2, caractérisé en ce qu'on détermine par un étalonnage expérimental préalable la position des zones d'échange de matière des constituants principaux et des constituants secondaires avec les constituants principaux, qu'on mesure à ces endroits au-dessus ou au-dessous de la sortie intermédiaire les températures Tu et To et qu'on les utilise ensuite pour la régulation de la sortie intermédiaire.

4. Procédé selon les revendications 1 à 3, caractérisé en ce qu'on utilise une valeur moyenne sur deux ou plusieurs températures pour Tu et/ou To à la place à chaque fois d'une température.
